# EUROPÄISCHE PATENTSCHRIFT

(11) **EP 1 526 977 B1**
(45) Veröffentlichungstag und Bekanntmachung des Hinweises auf die Patenterteilung: **23.12.2009**
(21) Anmeldenummer: 03783971.9
(22) Anmeldetag: 28.05.2003
(51) Int. Cl.: B60H 1/00

(54) **KILMAGEHÄUSE**
AIR-CONDITIONER HOUSING
BOITIER DE CLIMATISATION

(30) Priorität: 29.07.2002 DE 10235513; 17.12.2002 DE 10261036
(43) Veröffentlichungstag der Anmeldung: 04.05.2005
(73) Patentinhaber: Behr GmbH & Co. KG, 70469 Stuttgart (DE)
(72) Erfinder: KOUKOURAVAS, Evripidis, 72654 Neckartenzlingen (DE)
(74) Vertreter: Grauel, Andreas
(86) Internationale Anmeldenummer: PCT/EP2003/005612
(87) Internationale Veröffentlichungsnummer: WO 2004/014677

(56) Entgegenhaltungen:
- EP-A- 1 205 321
- EP-A- 1 225 071
- US-A- 4 586 652

## Beschreibung

Die Erfindung betrifft ein Klimagehäuse gemäß Oberbegriff des Anspruchs 1.

Klimagehäuse der hier angesprochenen Art werden insbesondere im Zusammenhang mit Fahrzeugklimatisierungseinrichtungen eingesetzt, die zur Heizung und Klimatisierung des Fahrzeuginnenraums dienen. Bei Einsatz von Klimatisierungseinrichtungen dieser Art wird eine Temperaturschichtung angestrebt, aufgrund derer die Temperatur im Fußraum höher eingestellt werden kann, als dies im Bereich des Oberkörpers oder des Kopfes eines Fahrzeuginsassen der Fall ist. Ziel ist es also, mit Hilfe der Klimatisierungseinrichtung eine Temperaturschichtung zu realisieren und einen unteren Bereich eines Fahrzeugs auf eine andere Temperatur zu bringen, als dies in einem oberen Bereich der Fall ist.

Bekannte Klimagehäuse schließen eine Verdampfungseinrichtung, eine Heizungseinrichtung und eine Luftsteuereinrichtung auf, die dazu dient, im Inneren des Klimagehäuses Luftströmungspfade auszubilden und in eine Mischkammer zu leiten, aus der die Luft in verschiedene Bereiche beispielsweise eines Fahrzeuginnenraums geleitet werden. Die aus dem Klimagehäuse strömende Luft wird mehr oder weniger geheizt und gekühlt, um verschiedene Bereiche des Fahrzeugs, also den vorderen Bereich oder den Fond, mit Luftströmen unterschiedlicher Temperatur zu versorgen. Um im Fond eine Temperaturschichtung zu realisieren, wurden bereits Luftleitrippen im Luftstrom vorgesehen, die allerdings dazu führen, dass sich ein relativ hoher Geräuschpegel einstellt und die abgegebene Luftmenge reduziert wird.

Aufgabe der Erfindung ist es daher, ein Klimagehäuse zu schaffen, das eine Temperaturschichtung Einbauten erlaubt.

Zur Lösung dieser Aufgabe wird ein Klimagehäuse vorgeschlagen, das die in Anspruch 1 genannten Merkmale aufweist. Das Klimagehäuse zeichnet sich durch einen separaten Schichtungskanal aus, durch den kühle Luft in den Bereich der Fondbelüftung führbar ist. Dadurch, dass die kühle Luft durch Beschreibung

Die Erfindung betrifft ein Klimagehäuse gemäß Oberbegriff des Anspruchs 1.

Klimagehäuse der hier angesprochenen Art werden insbesondere im Zusammenhang mit Fahrzeugklimatisierungseinrichtungen eingesetzt, die zur Heizung und Klimatisierung des Fahrzeuginnenraums dienen. Bei Einsatz von Klimatisierungseinrichtungen dieser Art wird eine Temperaturschichtung angestrebt, aufgrund derer die Temperatur im Fußraum höher eingestellt werden kann, als dies im Bereich des Oberkörpers oder des Kopfes eines Fahrzeuginsassen der Fall ist. Ziel ist es also, mit Hilfe der Klimatisierungseinrichtung eine Temperaturschichtung zu realisieren und einen unteren Bereich eines Fahrzeugs auf eine andere Temperatur zu bringen, als dies in einem oberen Bereich der Fall ist.

Bekannte Klimagehäuse schließen eine Verdampfungseinrichtung, eine Heizungseinrichtung und eine Luftsteuereinrichtung auf; die dazu dient, im Inneren des Klimagehäuses Luftströmungspfade auszubilden und in eine Mischkammer zu leiten, aus der die Luft in verschiedene Bereiche beispielsweise eines Fahrzeuginnenraums geleitet werden. Die aus dem Klimagehäuse strömende Luft wird mehr oder weniger geheizt und gekühlt, um verschiedene Bereiche des Fahrzeugs, also den vorderen Bereich oder den Fond, mit Luftströmen unterschiedlicher Temperatur zu versorgen. Um im Fond eine Temperaturschichtung zu realisieren, wurden bereits Luftleitrippen im Luftstrom vorgesehen, die allerdings dazu führen, dass sich ein relativ hoher Geräuschpegel einstellt und die abgegebene Luftmenge reduziert wird.

Aus der EP 1 225 071 A1 ist eine Klimatisierungseinrichtung bekannt, mit welcher ein vorderer und ein hinterer Bereich eines Fahrzeuginnenraums klimatisierbar ist. Die Luftverteilung und Temperierung für den Frontsitzbereich und den Rücksitzbereich ist dabei unabhängig voneinander einstellbar.

Aufgabe der Erfindung ist es, ein Klimagehäuse zu schaffen, das eine Temperaturschichtung ohne Einbauten erlaubt.

Zur Lösung dieser Aufgabe wird ein Klimagehäuse vorgeschlagen, das die in Anspruch 1 genannten Merkmale aufweist. Das Klimagehäuse zeichnet sich durch einen separaten Schichtungskanal aus, durch den kühle Luft in den Bereich der Fondbelüftung führbar ist. Dadurch, dass die kühle Luft durch einen eigenen Kanal in den Fondbereich geleitet wird, ist hier eine gezielte Temperaturbeeinflussung, insbesondere die Abgabe kühlerer Luft, möglich, ohne irgendwelche Einbauten in den Bereich der strömenden Luft einzubringen. Dadurch kann eine zusätzliche Geräuschentwicklung und eine Luftmengenreduzierung wirksam verhindert werden.

Bevorzugt wird ein Ausführungsbeispiel des Klimagehäuses, bei dem die Mündung des Schichtungskanals im Bereich einer Mischklappe der Luftsteuereinrichtung angeordnet ist. Diese kann dazu verwendet werden, die Temperatur der in den Schichtungskanal einströmende Luft zu beeinflussen.

Das Klimagehaüse ist so ausgebildet, dass die Mündung des Schichtungskanals in einer Funktionsstellung der Mischklappe nur mit der Mischkammer in Verbindung steht oder nur mit der von der Verdampfungseinrichtung gelieferten Luft beaufschlagbar ist. Die Zufuhr zusätzlicher kalter Luft kann also zum Einen gänzlich unterbrochen werden. Es ist aber auch möglich, über den Schichtungskanal ausschließlich von der Verdampfungseinrichtung gelieferte Luft in den Bereich der Fondbelüftung zu leiten und damit eine maximale zusätzliche Kühlung zu gewährleisten.

Schließlich wird ein Ausführungsbeispiel des Klimagehäuses bevorzugt, das sich dadurch auszeichnet, dass die Mündung des Schichtungskanals in einer Funktionsstellung der Mischklappe durch diese sowohl gegenüber der Mischkammer als auch gegenüber der von der Verdampfungseinrichtung gelieferten Kaltluft abgeschlossen wird.

Die Erfindung wird im Folgenden anhand der Zeichnung näher erläutert:
Die einzige Figur zeigt eine Prinzipskizze eines Klimagehäuses 1 im Schnitt, so dass dessen Innenraum 3 sichtbar wird. Die linke Seite des Klimagehäuses 1 weist bei Einbau in ein Kraftfahrzeug beispielsweise in Fahrtrichtung. Im Innenraum 3 ist eine Verdampfungseinrichtung 5, eine Heizungseinrichtung 7 sowie eine Luftsteuerungseinrichtung 9 vorgesehen. Letztere umfasst eine erste Mischklappe 11 sowie eine zweite Mischklappe 13.

Werden beide Mischklappen 11 und 13 in die hier dargestellte Funktionsstellung verlagert, kann keine Luft aus dem Einströmungsbereich 15 in die Mischkammer 23 gelangen, so dass über das Klimagehäuse 1 keine Luft abgegeben wird.

Die erste und zweite Mischklappe 11 und 13 sind vorzugsweise unabhängig voneinander steuerbar.

In die Mischkammer 23 einströmende Luft kann über einen ersten Auslass 27 zum Fußraum des Fondbereichs eines Fahrzeugs gelangen und/oder zum Frontbereich dieses Fahrzeugs.

Das Klimagehäuse 1 kann noch einen zweiten Auslass 29 aufweisen, der beispielsweise zu den Defrosterdüsen eines Kraftfahrzeugs führt und vorzugsweise mit einer eigenen Regelklappe 31 versehen ist, die die durch den zweiten Auslass 29 ausströmende Luftmenge regeln kann. Bei der hier gegebenen Darstellung befindet sich die Regelklappe 31 in einer Funktionsstellung, in der keine Luft aus der Mischkammer 23 zu den Defrosterdüsen gelangen kann, es tritt also aus dem zweiten Auslass 29 keine Luft aus.

Das Klimagehäuse 1 weist einen dritten Auslass 33 auf, über den Luft aus der Mischkammer 23 zur Frontbelüftung geleitet wird. Auch hier kann eine Regelklappe 35 vorgesehen werden, die dazu dient, wie im Falle der Regelklappe 31, die aus der Mischkammer 23 ausströmende Luftmenge einzustellen. Bei der hier gewählten Darstellung befindet sich die Regelklappe 35 in einer Funktionsstellung, in der keine Luft aus der Mischkammer 23 zur Frontbelüftung gelangt.

Das Klimagehäuse 1 weist schließlich einen vierten Auslass 37 auf, der zur Fondbelüftung führt. In die Mischkammer 23 eingeleitete Luft kann also über den vierten Auslass 37 zur Fondbelüftung gelangen.

Es ist auch möglich, hier eine Regelklappe vorzusehen, wie sie anhand des zweiten und dritten Auslasses 29 und 33 beschrieben wurde. Hier ist aber eine derartige Regelklappe nicht vorgesehen. Diese kann beispielsweise unmittelbar im Fondbereich selbst vorgesehen werden.

Zur Fondbelüftung führt auch ein hier benachbart zum vierten Auslass 37 angeordneter Schichtungskanal 39. Das dem vierten Auslass 37 gegenüberliegende Ende des Schichtungskanals 39 weist eine Mündung 41 auf, die sich in die Mischkammer 23 öffnet. Das heißt also, durch die Mündung 41 kann Luft aus der Mischkammer 23 herausgeleitet werden und gelangt über den Schichtungskanal 39 zur Fondbelüftung, wobei sich die in die Mündung 41 eintretende Luft mit der die Mischkammer 23 verlassenden Luft vermischt, die aus dem vierten Auslass 37 austritt.

Der Schichtungskanal 39 bildet also einen separaten Luftpfad für Luft, die aus der Mischkammer 23 zur Fondbelüftung geführt wird. Bei dem hier dargestellten Ausführungsbeispiel ist der Schichtungskanal 39 außerhalb des Klimagehäuses 1 geführt, was durch die gestrichelte Darstellung des Schichtungskanals 39 angedeutet ist.

Die Mündung 41 wirkt mit der Luftsteuerungseinrichtung 9 so zusammen, dass mehr oder weniger Kaltluft in die Mündung 41 eingeleitet wird, die dann über den Schichtungskanal 39 zum Bereich der Fondbelüftung gelangt.

Bei dem hier dargestellten Ausführungsbeispiel liegt die Mündung 41 im Bereich der ersten Mischklappe 11. In der hier dargestellten Funktionsstellung der ersten Mischklappe 11, in der der erste Luftströmungspfad 21 von der Verdampfungseinrichtung 5 in die Mischkammer 23 unterbrochen ist, tritt nur Luft aus der Mischkammer 23 in die Mündung 41 ein. Ist die Lüftung eingeschaltet, wird also Luft aus dem Einströmbereich 15 in die Mischkammer 23 geleitet. Es kann bei der hier dargestellten Funktionsstellung der ersten Mischklappe 11 durch die Verdampfungseinrichtung 5 strömende Luft nur durch die geöffnete zweite Mischklappe 13 und durch die Heizungseinrichtuhg 7 in die Mischkammer 23 gelangen. Die zweite Mischklappe 13 wird dazu aus der in der Figur dargestellten Funktionsstellung verlagert, so dass der zweite Luftströmungspfad 25 von der Verdampfungseinrichtung 5 durch die Heizungseinrichtung 7 in die Mischkammer 23 freigegeben wird.

Da durch die erste Mischklappe 11 die direkte Verbindung zwischen Verdampfungseinrichtung 5 und Mischkammer 23, nämlich der erste Luftströmungspfad 21 unterbrochen ist, gelangt in die Mischkammer 23 ausschließlich Luft, die aus der Verdampfungseinrichtung 5 austritt und von der Heizungseinrichtung 7 erwärmt wurde.

In der hier dargestellten Funktionsstellung der ersten Mischklappe 11 gelangt also erwärmte Luft aus der Mischkammer 23 in die Mündung 41 und über den Schichtungskanal 39 zur Fondbelüftung. Gleichzeitig gelangt Luft aus der Mischkammer 23 über den ersten Auslass 27 zum Fußraum des Fonds. Der Fußraum und die Fondbelüftung werden also mit erwärmter Luft aus der Mischkammer 23 beaufschlagt, wobei im Fußraum und im Bereich der Fondbelüftung dieselbe Temperatur herrscht. Die Fondbelüftung liefert die Luft in einer Höhe, die oberhalb des Fußraums liegt.

Die erste Mischklappe 11 ist so ausgebildet, dass sie -wie gesagt- den Freiraum zwischen der Wand 18 des Klimagehäuses 1 und dem Wandabschnitt 19 überspannt. Bei dem hier dargestellten Ausführungsbeispiel ist die erste Mischklappe 11 um eine Drehachse 43 schwenkbar und weist zwei symmetrische Mischklappenbereiche 45 und 47 auf. Die Mischklappenbereiche sind hier kreissegmentartig ausgebildet, wobei die Segmente mit ihrer Spitze an der Drehachse 43 angeordnet sind und mit ihrer kreisbogenförmig ausgebildeten, der Drehachse 43 abgewandten Außenseite einerseits am Gehäuse des Klimagehäuses 1 und andererseits an der Wand 18 anliegen, wenn sich die erste Mischklappe 11 in der hier dargestellten Funktionsstellung befindet. Der in der Figur gegebene Spalt zwischen der ersten Mischklappe 11 und der Wand 18 beziehungsweise dem Wandabschnitt 19 findet sich bei einer tatsächlichen Realisierung des Klimagehäuses 1 nicht, so dass also, wie gesagt, die erste Mischklappe 11 in der hier dargestellten Funktionsstellung den ersten Luftströmungspfad 21 vollständig abschließt.

Die Mündung 41 befindet sich oberhalb der Drehachse 43, während die Mischklappenbereiche 45 und 47 rechts und links von der Drehachse 43 angeordnet sind.

Wird die erste Mischklappe 11 gegen den Uhrzeigersinn verschwenkt, so gibt der erste Mischklappenbereich 45 einen Spalt zwischen seiner kreisbogenförmigen Außenfläche des ersten Mischklappenbereichs 45 und der Wand 18 des Klimagehäuse 1 frei, so dass ein Strömungspfad zwischen der Verdampfungseinrichtung 5 und der Mischkammer 23 freigegeben wird, nämlich der erste Luftströmungspfad 21. Bei dieser Drehung gibt der zweite Mischklappenbereich 47 einen Spalt zum Wandabschnitt 19 frei, so dass auch hier kalte Luft von der Verdampfungseinrichtung 5 in die Mischkammer 23 gelangt und der erste Luftströmungspfad 21 realisiert werden kann.

Es wird deutlich, dass bei einer Drehung der ersten Mischklappe 11 gegen den Uhrzeigersinn Luft aus der Verdampfungseinrichtung 5 und auch Luft aus der Mischkammer 23 in die Mündung 41 gelangen kann.

Wird die erste Mischklappe 11 im Uhrzeigersinn aus der in der Figur dargestellten Position verdreht, so zeigt sich, dass der erste Mischklappenbereich 45 so breit gewählt ist, also einen so großen Öffnungswinkel einschließt, dessen Ursprung mit der Drehachse 43 zusammenfällt, dass er die Mündung 41 vollkommen verschließen kann. Um dies zu erreichen, muss die Mündung 41 vollständig innerhalb des Bereichs liegen, der von dem ersten Mischklappenbereich 45 überstrichen wird. Die der Drehachse 43 am weitesten entfernte Begrenzung der Mündung 41 muss also in einem Abstand liegen, der kleiner oder gleich ist, wie der Abstand des gekrümmten Bereichs des ersten Mischklappenbereichs 45 von der Drehachse 43.

Wird die erste Mischklappe 11 weiter im Uhrzeigersinn gedreht, so liegt die in der Figur unten links angeordnete äußere Kante des ersten Mischklappenbereichs 45 rechts oben auf einer gedachten Verbindungslinie zwischen einer Kante 49 der Wand 18 des Klimagehäuses 1 und der Drehachse 43. In dieser Funktionsstellung wird die Mündung 41 von der ersten Mischklappe 11 vollständig gegenüber der Mischkammer 23 abgeschlossen; gleichzeitig schließt der erste Mischklappenbereich 43 gemeinsam mit dem zweiten Mischklappenbereich 45 die Verbindung zwischen der Verdampfungseinrichtung 5 und der Mischkammer 23 vollständig ab, so dass der erste Luftströmungspfad 21 unterbrochen ist. In dieser Funktionsstellung ist die Verbindung zwischen der Verdampfungseinrichtung 5 und der Mündung 41 freigegeben, so dass aus der Verdampfungseinrichtung 5 austretende Luft frei in die Mündung 41 eintreten kann.

Mit der zweiten Mischklappe 13 kann der zweite Luftströmungspfad 25 durch die Heizungseinrichtung 7 mehr oder weniger freigegeben werden. Das heißt, kalte Luft aus der Verdampfungseinrichtung 5 kann ausschließlich dem zweiten Luftströmungspfad 25 folgend durch die Heizungseinrichtung 7 strömen, wobei die Menge der geheizten Luft durch die erste Mischklappe 11 einstellbar ist. Es kann also mehr oder weniger kalte Luft aus der Verdampfungseinrichtung 5 durch die Heizungseinrichtung 7 in die Mischkammer 23 geführt werden, während die Mündung 41 durch die erste Mischklappe 11 gegenüber der Mischkammer 23 abgeschlossen ist und in freier Verbindung zur Verdampfungseinrichtung 5 steht. Es wird also in dieser Funktionsstellung der ersten und zweiten Mischklappe 11 und 13 besonders viel kalte Luft über die Mündung 41 in den Schichtungskanal 39 und von dort zur Fondbelüftung gelangen.

Nach allem wird deutlich, dass die erste Mischklappe 11 einerseits dazu dient, den ersten Strömungspfad 21 zu beeinflussen, also die Menge der Luft einzustellen, die unmittelbar von der Verdampfungseinrichtung 5 in die Mischkammer 23 gelangt. Diese Luft durchläuft also nicht die Heizungseinrichtung 7, wird also nicht erwärmt. Gleichzeitig dient die erste Mischklappe 11 dazu, die in die Mündung 41 einströmende Luft zu beeinflussen: In der in der Figur dargestellten Funktionsstellung der ersten Mischklappe 11 gelangt ausschließlich Luft aus der Mischkammer 23 in die Mündung 41 und damit in den Schichtungskanal 29. Es ist aber auch möglich, die Mündung 41 vollständig abzuschließen, weil der erste Mischklappenbereich 45 der ersten Mischklappe 11 kreissegmentförmig ausgebildet ist. Schließlich ist es möglich, die erste Mischklappe 11 in eine Funktionsstellung zu verdrehen, in der die Mündung 41 gegenüber der Mischkammer 23 abgeschirmt ist und ausschließlich von durch die Verdampfungseinrichtung 5 strömende Luft beaufschlagt wird.

Es ist grundsätzlich möglich, die erste Mischklappe 11 als ebene symmetrisch zur Drehachse 43 ausgebildete Klappe zu realisieren. In diesem Fall kann die Mündung 41 ebenfalls vollständig gegenüber der Mischkammer 23 abgeschirmt werden, so dass nur kalte Luft aus der Verdampfungseinrichtung 5 hier einströmen kann. Außerdem ist es möglich, die erste Mischklappe 11 auch bei dieser Realisierung so zu verstellen, dass die Mündung 41 ausschließlich mit der Mischkammer 23 in Verbindung steht und gegenüber einer unmittelbaren Beaufschlagung mit Luft aus der Verdampfungseinrichtung 5 abgeschirmt ist, weil nämlich der erste Luftströmungspfad 21 unterbrochen ist.

Zur Funktion der in der Figur dargestellten Mischklappen 11 und 13 und der Regelklappen 31 und 33 ist noch Folgendes festzuhalten: Die Schnittdarstellung gemäß der Figur zeigt eine innere Seitenfläche des Klimagehäuses 1, in die eine erste Öffnung, nämlich die Mündung 41, und eine zweite Öffnung, nämlich der erste Auslass 23, eingebracht ist. Die Misch- und Regelklappen 11, 13, 31 und 33 erstrecken sich -wie auch ihre zugehörigen Drehachsen 43- senkrecht zu der hier dargestellten Innenfläche und liegen mit einer Seitenkante auf dieser Innenfläche auf. Entsprechend liegen die verschiedenen Klappen mit der dem Betrachter zugewandten Seitenkante auf der gegenüberliegenden Innenfläche des Klimagehäuses 1 auf. Dadurch ist sichergestellt, dass seitlich an den Misch- und Regelklappen keine Luft vorbeiströmen kann, wenn sie die zugehörigen Luftpfade verschließen sollen. Die Klappen können vorzugsweise auf der der Innenfläche zugewandten Seite jeweils Dichtungslippen aufweisen.

Entsprechend dichten die Klappen 11, 13, 31 und 33 auch mit ihren senkrecht auf der Bildebene stehenden Längskanten in bestimmten Funktionsstellungen den Luftstrom ab. Beispielsweise dichtet die zweite Mischklappe 13 mit einer unten links liegenden Kante gegenüber der Wand 18 des Klimagehäuses 1 und mit einer oben rechts liegenden Außenkante gegenüber dem Wandbereich 19 ab. In der dargestellten Funktionsstellung dichtet die erste Mischklappe 11 mit ihrer rechten oberen Kante des ersten Mischklappenbereichs 45 gegenüber der Wand 18 des Klimagehäuses 1 ab und mit ihrer unteren Kante des zweiten Mischklappenbereichs 47 gegenüber dem Wandbereich 19.

Die Länge der Regelklappen 31 und 33 ist so gewählt, dass diese, wie dargestellt, die Breite der zugehörigen Auslässe 29 und 33 überspannen können und mit ihren senkrecht zur Bildebene stehenden Dichtkanten diese abschließen können. Die Regelklappen 31, 33 können so ausgebildet werden, wie dies anhand der ersten Mischklappe 11 erläutert wurde.

Aus den Erläuterungen zu der Figur wird deutlich, dass die zweite Mischklappe 13 ausschließlich dazu dient, den von der Verdampfungseinrichtung 5 durch die Heizeinrichtung 7 verlaufenden zweiten Luftströmungspfad 25 zu beeinflussen, der nach Durchtritt durch die Heizungseinrichtung 7 in die Mischkammer 23 führt. Die erste Mischklappe 11 beeinflusst den Luftstrom von der Verdampfungseinrichtung 5, der unmittelbar, das heißt ohne die Heizungseinrichtung 7 zu durchlaufen, in die Mischkammer 23 führt. Durch die beiden Mischklappen 11 und 13 ist es also möglich, die Menge der Luft zu beeinflussen, die von der Verdampfungseinrichtung 5 unmittelbar in die Mischkammer 23 gelangt und zum Anderen die Luft, die von der Verdampfungseinrichtung 5 über die Heizungseinrichtung 7 in die Mischkammer 23 gelangt. Die zweite Mischklappe 13 regelt also die Wärmezufuhr in die Mischkammer 23, die erste Mischklappe 11 die Kältezufuhr.

Zusätzlich ist die erste Mischklappe 11 dazu vorgesehen, den Luftanteil zu beeinflussen, der durch die Mündung 41 in den Schichtungskanal 39 gelangt. Dabei ist es möglich, nur Kaltluft aus der Verdampfungseinrichtung 5 in die Mündung 41 einzuleiten, während diese gegenüber der Mischkammer 23 abgeschlossen ist. Zusätzlich kann die erste Mischklappe 11 so eingestellt werden, dass sowohl aus der Mischkammer 23 als auch unmittelbar aus der Verdampfungseinrichtung 5 Luft in die Mündung 41 gelangen kann.

Schließlich ist es denkbar, die erste Mischklappe 11 so auszugestalten, dass sie zwei Mischklappenbereiche 45 und 47 aufweist, die kreis-segmentartig ausgebildet sind und die Möglichkeit bieten, die Mündung 41 komplett abzuschließen, so dass keine Luft aus der Verdampfungseinrichtung 5 und auch keine Luft aus der Mischkammer 23 in die Mündung 41 und damit in dem Schichtungskanal 39 eintreten kann. Es zeigt sich hier auch, dass die erste Mischklappe 11 einerseits eine ebene Platte und andererseits ein als Mischklappenbereich dienendes, kreissegmentartiges Element aufweisen kann, sie braucht also nicht symmetrisch ausgebildet zu sein. In diesem Fall kann immer noch die Möglichkeit gegeben werden, die Mündung 41 vollständig abzuschließen.

Nach allem wird deutlich, dass das erste Klimagehäuse 1 so ausgestaltet ist und eine derartige Luftsteuereinrichtung 9 aufweist, dass von der Verdampfungseinrichtung 5 umströmende kalte Luft ohne Aufheizung in die Mischkammer geleitet werden kann und dass von der Verdampfungseinrichtung 5 Luft über die Heizungsrichtung 7 in die Mischkammer geführt werden kann. Durch den beiden Luftströmungspfaden 21 (kalte Luft) und 25 (geheizte Luft) zugeordnete Mischklappen 11 und 13 der Luftsteuereinrichtung 9 kann, wie üblich, mehr oder weniger geheizte Luft in die Mischkammer 23 geleitet und dem Fußraum sowie der Belüftung von Fond- und Frontbereich eines Fahrzeugs zugeführt werden. Durch die Anordnung eines Schichtungskanals 39, der eine Mündung 41 im Bereich einer der Mischklappen der Luftsteuerrichtung 9 aufweist, kann eine Temperaturschichtung im Fondbereich erreicht werden. Durch das Zusammenspiel der Mündung 41 mit der zweiten Mischklappe 13 kann mehr oder weniger kalte Luft aus der Verdampfungseinrichtung 5 durch den Schichtungskanal 39 der Fondbelüftung zugeführt werden, die im Übrigen über den vierten Auslass 37 mit Luft aus der Mischkammer 23 versorgt wird.

Vorteilhaft ist, wie sich aus der Beschreibung ergibt, dass die Fondbelüftung mit Kaltluft beaufschlagt werden kann, ohne dass irgendwelche Luftleitrippen im Luftstrom angeordnet werden müssen, die zur Geräuschentwicklung führen und die abgegebene Luftmenge reduzieren. Es ist also möglich, durch das Zusammenspiel der ersten Mischklappe 11 mit der Mündung 41 des Schichtungskanals 39 eine größere Luftmenge bei geringerer Geräuschentwicklung für die Temperaturschichtung im Fondbereich eines Kraftfahrzeugs zur Verfügung zu stellen.

Es zeigt sich im Übrigen, dass durch die hier gewählte Anordnung der Mündung 41 des Schichtungskanals 39 ohne irgendwelche zusätzlichen Einbauten die Temperaturschichtung erreicht wird. Die beiden Mischklappen 11 und 13 sind ohnehin zur Einstellung der Luft in der Mischkammer 23 vorhanden. Es bedarf also nur der hier dargestellten Anordnung der Mündung 41 im Wirkungsbereich der ersten Mischklappe 11, um die beschriebene Temperaturschichtung zu erreichen.

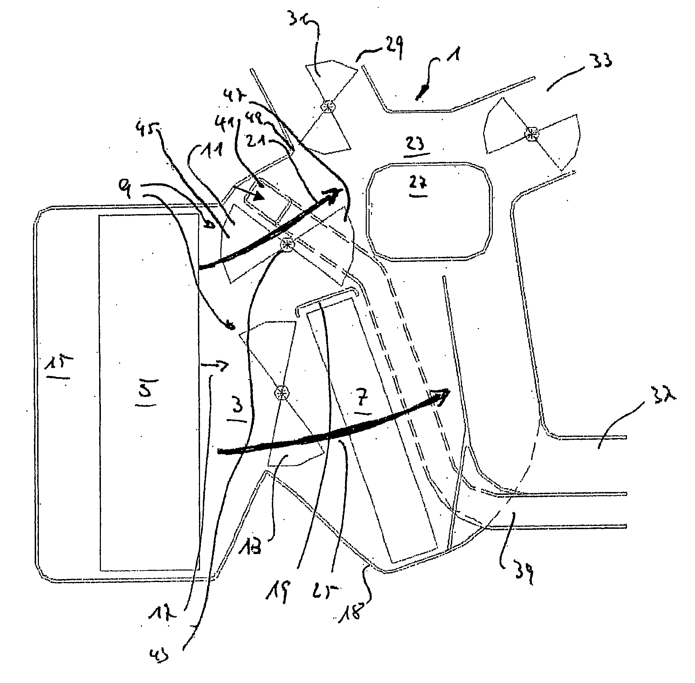

Ähnlich ist es grundsätzlich denkbar, die Mündung 41 auch im Bereich der zweiten Mischklappe 13 anzuordnen, wobei auch hier die Möglichkeit gegeben ist, mehr oder weniger kalte Luft aus der Verdampfungseinrichtung 5 in die Mündung 41 und damit in dem Schichtungskanal 39 einzuleiten. Es zeigt sich jedoch aus Figur 1, dass die zweite Mischklappe 13 aufgrund der räumlichen Gegebenheiten nur einen begrenzten Schwenkbereich aufweist. Es lassen sich damit nicht ohne weiteres alle Funktionen realisieren, die bei der Anordnung der Mündung 41 im Bereich der ersten Mischklappe 11 möglich sind. Daher wurde auch die hier dargestellte Ausführungsform des Klimagehäuses 1 bevorzugt.

## Patentansprüche

1. Klimagehäuse mit einer Verdampfungseinrichtung (5), einer Heizungseinrichtung (7), einer Mischkammer (23), aus der Luft zum Fond-Fußraum und zur Fondbelüftung strömt, einer Luftsteuereinrichtung (9), die die durch die Verdampfungseinrichtung (5) und die Heizungseinrichtung (7) in die Mischkammer (23) strömende Luft mittels Mischklappen (11,13) steuert, und einen separaten Schichtungskanal (39), durch den kühle Luft in den Bereich der Fondbelüftung führbar ist, **dadurch gekennzeichnet, dass** die Mündung (41) des Schichtungskanals (39) in einer Funktionsstellung der Mischklappe (13) nur mit der Mischkammer (23) in Verbindung steht oder nur mit der von der Verdampfungseinrichtung (5) gelieferten Luft beaufschlagbar ist.

2. Klimagehäuse nach Anspruch 1, **dadurch gekennzeichnet, dass** die Mündung (41) des Schichtungskanals (39) im Bereich einer Mischklappe angeordnet ist.

3. Klimagehäuse nach einem der vorhergehenden Ansprüche, **dadurch gekennzeichnet, dass** die Mündung (41) des Schichtungskanals (39) in einer Funktionsstellung der Mischklappe durch diese sowohl gegenüber der Mischkammer (23) als auch gegenüber der von der Verdampfungseinrichtung (5) gelieferten Kaltluft abgeschlossen wird.

## Claims

1. An air conditioner housing with an evaporation device (5), with a heating device (7), with a mixing chamber (23) out of which air flows to the foot space of the rear part and to the ventilation of the rear part, with an air control device (9) which, by means of mixing flaps (11, 13), controls the air flowing through the evaporation device (5) and the heating device (7) into the mixing chamber (23), and a separate stratification duct (39) through which cool air can be led into the region of ventilation of the rear part, **characterized in that** the issue (41) of the stratification duct (39) is connected only to the mixing chamber (23) in a functional position of the mixing chamber (23) or can be acted upon only by the air delivered by the evaporation device (5).

2. The air conditioner housing as claimed in claim 1, **characterized in that** the issue (41) of the stratification duct (39) is arranged in the region of a mixing flap.

3. The air conditioner housing as claimed in one of the preceding claims, **characterized in that,** in one functional position of the mixing flap, the issue (41) of the stratification duct (39) is closed off by said mixing flap both with respect to the mixing chamber (23) and with respect to the cold air delivered by the evaporation device (5).

## Revendications

1. Carter de climatisation comprenant un dispositif d'évaporation (5), un dispositif de chauffage (7), une chambre de mélange (23) à partir de laquelle s'écoule de l'air pour l'espace à l'arrière prévu pour les pieds et pour la ventilation à l'arrière, un dispositif de régulation d'air (9) qui, au moyen de volets mélangeurs (11, 13), régule l'air s'écoulant dans la chambre de mélange (23) à travers le dispositif d'évaporation (5) et le dispositif de chauffage (7), et en traversant un conduit de répartition séparé (39) par lequel de l'air froid peut être fourni dans la zone de ventilation à l'arrière,
**caractérisé en ce que** l'ouverture (41) du conduit de répartition (39), dans une position fonctionnelle du volet mélangeur (13), communique seulement avec la chambre de mélange (23), ou bien ne peut être alimentée que par l'air fourni par le dispositif d'évaporation (5).

2. Carter de climatisation selon la revendication 1, **caractérisé en ce que** l'ouverture (41) du conduit de répartition (39) est disposée dans la zone d'un volet mélangeur.

3. Carter de climatisation selon l'une ou l'autre des revendications précédentes, **caractérisé en ce que** l'ouverture (41) du conduit de répartition (39), dans une position fonctionnelle du volet mélangeur, est fermée par celui-ci, aussi bien par rapport à la chambre de mélange (23) que par rapport à l'air froid fourni par le dispositif d'évaporation (5).
